(19) Europäisches Patentamt
European Patent Office
Office européen des brevets

(11) **EP 2 734 884 B1**

(12) **FASCICULE DE BREVET EUROPEEN**

(45) Date de publication et mention
de la délivrance du brevet:
**08.01.2020 Bulletin 2020/02**

(21) Numéro de dépôt: **12750437.1**

(22) Date de dépôt: **20.07.2012**

(51) Int Cl.:
***G02B 21/08*** *(2006.01)* ***G02B 5/00*** *(2006.01)*

(86) Numéro de dépôt international:
**PCT/FR2012/051730**

(87) Numéro de publication internationale:
**WO 2013/014379 (31.01.2013 Gazette 2013/05)**

(54) **DISPOSITIF OPTIQUE D'ÉCLAIRAGE CONOSCOPIQUE A CONE CREUX POUR MICROSCOPE OPTIQUE ET PROCÉDÉ DE MICROSCOPIE OPTIQUE EN CONOSCOPIE**

KONOSKOPISCHE OPTISCHE BELEUCHTUNGSVORRICHTUNG MIT EINEM HOHLEN KONUS FÜR EIN OPTISCHES MIKROSKOP UND VERFAHREN ZUR OPTISCHEN MIKROSKOPIE IN DER KONOSKOPIE

CONOSCOPIC ILLUMINATION OPTICAL DEVICE WITH A HOLLOW CONE FOR AN OPTICAL MICROSCOPE AND METHOD OF OPTICAL MICROSCOPY IN CONOSCOPY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2011 FR 1156687**

(43) Date de publication de la demande:
**28.05.2014 Bulletin 2014/22**

(60) Demande divisionnaire:
**19207202.3**

(73) Titulaire: **Horiba France SAS
91160 Longjumeau (FR)**

(72) Inventeurs:
• **FROIGNEUX, Emmanuel
  F-59650 Villeuneuve D'ascq (FR)**
• **SCHREIBER, Joachim
  F-59650 Villeneuve D'ascq (FR)**

(74) Mandataire: **Jacobacci Coralis Harle
32, rue de l'Arcade
75008 Paris (FR)**

(56) Documents cités:
**EP-A2- 0 627 643    WO-A1-2008/107702
US-A- 4 255 021    US-A- 5 757 470**

**EP 2 734 884 B1**

**Description**

La présente invention concerne un dispositif d'éclairage ou d'illumination conoscopique à cône creux (ou hollow cone illumination) et à focalisation ponctuelle pour microscope optique et un procédé de microscopie optique en conoscopie. Ce dispositif d'éclairage convient tout particulièrement pour l'excitation laser d'un point sur un échantillon dans un microscope Raman, dans un microscope à photoluminescence ou à fluorescence, ou encore à un appareil de microspectroscopie moléculaire en configuration de rétro-diffusion. Le dispositif d'éclairage s'applique également à un microellipsomètre ayant une résolution spatiale micrométrique.

La microscopie optique repose sur l'utilisation de techniques d'imagerie dont les performances sont définies à la fois par la résolution latérale encore appelée résolution image et par la résolution axiale ou en profondeur de champ. La résolution image dépend du grandissement du système optique d'imagerie, des caractéristiques du faisceau et de la qualité des optiques. La résolution axiale est fonction non seulement des caractéristiques optiques du système d'imagerie mais aussi des propriétés de l'échantillon à analyser. La combinaison de la résolution latérale et de la résolution axiale détermine le volume d'analyse.

Différentes techniques d'imagerie ont été développées afin d'améliorer la résolution latérale et/ou axiale des microscopes. En particulier, dans un microscope confocal, un diaphragme est disposé dans le plan conjugué de l'objet afin de bloquer les rayons provenant de points situés en dehors du plan focal de l'objectif de microscope. Un microscope confocal permet ainsi d'améliorer la résolution axiale. D'autre part, différentes techniques d'éclairage et d'imagerie ont été développées afin d'améliorer le contraste des images : microscopie à champ clair (ou brightfield), à champ sombre (ou darkfield), microscopie interférentielle, à contraste de phase... Dans un microscope à champ clair (ou brightfield en anglais), un faisceau lumineux éclaire toute la surface de l'objet à analyser. Le faisceau lumineux transmis ou réfléchi par l'objet est collecté pour former une image de l'objet en champ clair. Or, un éclairage à champ clair éclaire non seulement un plan de l'objet, mais tout un volume à l'intérieur du cône de lumière incident, si bien que la résolution axiale est faible. Le signal recueilli peut provenir de tout le volume de l'échantillon ou du substrat qui supporte l'échantillon, par exemple une lame de verre. Dans le cas d'échantillons de faible épaisseur, comme un échantillon biologique de quelques microns d'épaisseur, l'intensité du signal provenant du support en verre peut être supérieure à l'intensité du signal utile provenant de l'objet à analyser, ce qui réduit le rapport signal à bruit.

La microscopie en champ sombre repose sur l'utilisation d'un faisceau d'éclairage dont la partie centrale est masquée par un cache de manière à générer un cône de lumière à centre sombre, l'image de la source s'étendant sur toute la surface de l'objet à analyser. La microscopie en champ sombre permet de minimiser la quantité de lumière transmise et de ne collecter que la lumière diffusée par l'échantillon. La microscopie en champ sombre ne permet pas d'améliorer la résolution axiale mais permet de mettre en évidence des petits éléments diffusant invisibles en fond clair. Toutefois, la microscopie en champ sombre réduit fortement l'intensité lumineuse collectée et reste limitée en résolution latérale.

La microspectrométrie consiste à coupler un microscope optique et un dispositif d'analyse spectrométrique, comme par exemple la microspectrométrie Raman ou la microspectrométrie de photoluminescence ou PL, la microspectrométrie de fluorescence ou encore la microellipsométrie. Les différentes techniques de spectrométrie utilisent généralement un faisceau d'éclairage dirigé vers l'échantillon à analyser et collectent un faisceau optique diffusé (pour le Raman), réfléchi et/ou transmis (en ellipsométrie). Le faisceau d'excitation peut être un faisceau laser, par exemple en spectrométrie Raman ou en ellipsométrie monochromatique.

Dans une configuration classique de microspectrométrie Raman (ou PL ou de fluorescence), on éclaire l'échantillon en champ clair par un faisceau laser focalisé par l'objectif de microscope et on collecte le signal rétro diffusé autour de l'axe optique. Un faisceau laser d'excitation peut être focalisé de manière à obtenir une analyse avec une résolution latérale micrométrique. Toutefois, la résolution spatiale en profondeur (dans la direction de l'axe du faisceau laser) atteint difficilement le domaine micrométrique. En effet, un faisceau laser génère un rayonnement optique non négligeable en dehors du point focal (ou waist en anglais) du faisceau laser. Il est difficile d'éliminer les signaux parasites (par exemple de fluorescence) provenant de zones de l'échantillon situées en dehors du plan de focalisation, notamment dans le cas d'un échantillon en couche très mince déposé sur une lame de verre. Il est connu de coupler un spectromètre Raman à un microscope confocal pour améliorer la résolution axiale.

La publication de M. V. Schulmerich et al., « Dark field Raman microscopy », Anal. Chem. 2010, 82, 6273-6280 décrit un microscope Raman confocal à champ sombre, comprenant un système d'éclairage muni d'un cache centré sur l'axe d'un faisceau laser incident, un système optique de collection du signal de rétro-diffusion Raman provenant d'un échantillon et une lame dichroïque pour séparer le faisceau laser d'excitation et le faisceau de diffusion Raman. Le dispositif d'éclairage forme une zone d'éclairage annulaire qui est focalisée en un point sur l'échantillon par un objectif. Ainsi, le faisceau lumineux d'éclairage laser comprend un cône axial sombre et une zone lumineuse comprise entre le cône sombre et un deuxième cône coaxial. Selon la publication de M. V. Schulmerich et al., l'éclairage laser à champ sombre permet d'augmenter le rapport signal sur bruit de diffusion Raman provenant de la surface d'un échantillon en réduisant la contribution du fond ce qui permet d'améliorer la mesure d'échantillons très minces. Cependant, le dispositif d'éclairage à champ sombre de Schulmerich *et al.* supprime la majeure partie de l'énergie du faisceau laser incident. La demande de brevet EP 627 643 A2 divulgue un microscope à fluorescence comprenant deux lentilles coniques. La publication WO 2008/107702 A1 concerne un microscope spectrométrique Raman comprenant une lentille conique.

D'autre part, pour extraire le signal Raman, qui est de faible intensité comparé à la réflexion ou à la diffusion Rayleigh, on utilise généralement un ou plusieurs filtres d'injection/réjection (ou filtre notch). Un filtre d'injection/réjection laisse passer le faisceau incident à la longueur d'onde du laser et sépare angulairement d'une part le faisceau de rétro-diffusion Rayleigh à la longueur d'onde incidente et d'autre part le faisceau de rétro-diffusion Raman, décalé en longueur d'onde par rapport à la longueur d'onde du faisceau laser. Pour extraire des mesures Raman dites basses fréquences, c'est-à-dire à des longueurs d'onde proches de la longueur d'onde du laser, il est jusqu'à présent nécessaire d'utiliser des filtres à fort taux de réjection et ayant une faible largeur de bande spectrale autour de la longueur d'onde du laser. De tels filtres nécessitent un réglage angulaire précis et sont encore très coûteux.

La microellipsométrie est une autre technique de microspectrométrie dans laquelle on mesure les propriétés d'un échantillon éclairé en lumière polarisée. La microellipsométrie est actuellement limitée en termes de résolution axiale et latérale. En effet, un ellipsomètre présente généralement une sensibilité optimale pour un angle d'incidence élevé, compris entre 60 et 75 degrés par rapport à la normale à la surface de l'échantillon. Un appareil de micro-ellipsométrie utilise généralement un objectif de focalisation incliné sur le faisceau incident et un objectif de collecte incliné sur le faisceau réfléchi. Du fait de l'encombrement des objectifs sous un angle d'incidence élevé, il est difficile d'approcher un micro-ellipsomètre de la surface de l'échantillon, et l'angle d'incidence produit un point de focalisation ovale sur la surface (d'où un élargissement), ce qui limite la résolution latérale et axiale d'un microellipsomètre. Il est donc souhaitable d'améliorer la résolution latérale et axiale d'un microellipsomètre, tout en conservant ou améliorant l'intensité du signal d'ellipsométrie.

De manière générale, il est souhaitable d'améliorer le rapport signal sur bruit en microspectrométrie pour permettre l'analyse d'échantillons de petite taille et/ou de faible épaisseur tels que des échantillons minces biochimiques ou des couches minces en semi-conducteurs. Plus particulièrement, il est souhaitable d'améliorer la résolution axiale et latérale en microspectrométrie Raman (ou PL et/ou fluo) ou en microellipsométrie. L'utilisation d'un microscope confocal et/ou d'un champ sombre peut en principe permettre une amélioration de la résolution axiale. Toutefois, l'occultation de la partie centrale du faisceau d'éclairage réduit considérablement l'intensité du faisceau d'excitation et réduit proportionnellement l'intensité du signal collecté, que ce soit un signal de diffusion Raman ou un signal ellipsométrique. Or, les signaux de diffusion Raman sont par nature de très faible intensité. L'utilisation d'un champ sombre en microscopie Raman est donc généralement défavorable, sauf dans le cas où le fond, par exemple le substrat, génère un signal de fluorescence beaucoup plus important que le signal Raman de l'échantillon à analyser. De même, il n'est pas souhaitable de réduire l'intensité de signaux ellipsométriques.

Un des buts de l'invention est de proposer un dispositif apte à générer un faisceau optique d'éclairage focalisé ponctuellement sur une zone de dimension micrométrique d'un échantillon, ledit faisceau optique d'éclairage étant suffisamment intense pour générer un signal optique de diffusion, de réflexionet/ou de transmission. Un autre but de l'invention est de proposer un dispositif de microspectrométrie Raman.

Un autre but de l'invention est de proposer un procédé de microspectrométrie présentant une résolution latérale micrométrique et un rapport signal sur bruit augmenté par rapport aux procédés de l'art antérieur.

La présente invention a pour but de remédier aux inconvénients précités et concerne plus particulièrement un dispositif optique d'illumination conoscopique à cône creux et à focalisation ponctuelle pour microscope optique comprenant :

- des moyens d'illumination comprenant une source de lumière ponctuelle, lesdits moyens d'illumination étant aptes à générer un faisceau lumineux incident collimaté,
- un objectif optique ayant un axe optique et un plan focal image, l'objectif optique étant disposé de manière à recevoir un faisceau lumineux incident cylindrique et à former une image de la source en un point dans le plan focal image.

Selon l'invention, le dispositif optique d'illumination les caractéristiques techniques récitées dans la revendication 1. Les revendications dépendantes définissent des modes de réalisation additionels.

Selon un mode de réalisation particulier, la première lentille conique comprend une face conique centrée sur l'axe optique et disposée vers le faisceau lumineux incident collimaté et la deuxième lentille conique comprend une face conique centrée sur l'axe optique et disposée vers le premier faisceau lumineux à cône creux.

Avantageusement, selon un mode de réalisation particulier, le dispositif optique d'éclairage à cône creux comprend en outre un système optique afocal disposé soit entre des moyens d'illumination et la première lentille conique, soit entre la première lentille conique et la deuxième lentille conique, soit entre la deuxième lentille conique et l'objectif.

Selon un aspect particulier de ce mode de réalisation, le dispositif optique d'éclairage à cône creux et à focalisation ponctuelle comprend en outre des moyens de déplacement axial dudit système optique afocal le long de l'axe optique.

Avantageusement, le dispositif optique d'éclairage à cône creux et à focalisation ponctuelle comprend en outre des moyens de déplacement axial de la première et/ou de la deuxième lentille conique le long de l'axe optique de manière à modifier les dimensions géométriques du faisceau lumineux cylindrique à fond noir.

Selon un mode de réalisation particulier, le dispositif optique d'éclairage à cône creux et à focalisation ponctuelle comprend en outre des moyens de polarisation du faisceau optique d'éclairage.

L'invention concerne aussi un microscope optique comprenant un dispositif optique d'éclairage à cône creux et à focalisation ponctuelle selon l'un des modes de réalisation décrits.

L'invention concerne aussi un microspectromètre comprenant un dispositif optique d'éclairage à cône creux et à focalisation ponctuelle selon l'un des modes de réalisation décrits pour éclairer un échantillon par un faisceau lumineux à cône creux focalisé en un point, de manière à générer un faisceau optique transmis, réfléchi ou diffusé par l'échantillon, ledit microspectromètre comprenant en outre un composant optique apte à séparer spatialement ledit faisceau d'éclairage à cône creux et au moins une partie du faisceau optique transmis, réfléchi ou diffusé par l'échantillon de manière à former un faisceau collecté et à diriger ledit faisceau collecté vers un spectromètre.

Plus particulièrement, l'invention concerne un microspectromètre Raman à cône creux et à focalisation ponctuelle dans lequel ledit composant optique est un miroir de collecte incliné par rapport à l'axe optique de manière à collecter un faisceau de rétro-diffusion Raman provenant d'un échantillon, ledit miroir étant disposé à l'intérieur du faisceau d'éclairage à cône creux.

Selon un mode de réalisation particulier, l'invention concerne un microspectromètre Raman à cône creux dans lequel ledit composant optique est un miroir incliné par rapport à l'axe optique de manière à recevoir le faisceau d'éclairage cylindrique à fond noir et à le diriger vers l'objectif, ledit miroir comprenant une ouverture de manière à laisser passer un faisceau de rétro-diffusion provenant d'un échantillon et collecté par l'objectif.

Selon un mode de réalisation particulièrement avantageux, l'invention propose un dispositif de microspectrométrie Raman amplifié par pointe comprenant un microspectromètre Raman à cône creux selon l'un des modes de réalisation décrits et un microscope à champ proche comportant une pointe ayant une extrémité disposée au point de focalisation du faisceau lumineux à cône creux.

Selon une première variante du dispositif de microspectrométrie Raman amplifié par pointe, le microscope est un microscope droit, la pointe de microscope à champ proche et le dispositif optique d'éclairage à cône creux et à focalisation ponctuelle étant disposés d'un même côté de l'échantillon.

Selon une autre variante du dispositif de microspectrométrie Raman amplifié par pointe, le microscope est un microscope inversé, l'extrémité de la pointe de microscope à champ proche étant disposée face au dispositif optique d'éclairage à cône creux de manière à ce que le faisceau lumineux à cône creux soit focalisé à travers un échantillon transparent sur l'extrémité de la pointe.

La présente demande concerne aussi un microscope polarimétrique non revendiqué comprenant un dispositif optique d'éclairage à cône creux et à focalisation ponctuelle selon l'un des modes de réalisation décrits et comprenant en outre un générateur d'état de polarisation et un convertisseur de polarisation cartésien-cylindrique disposés sur le trajet du faisceau d'illumination et des moyens de collecte d'un faisceau diffusé par un échantillon.

La présente demande concerne aussi un microellipsomètre non revendiqué comprenant un dispositif optique d'éclairage à cône creux et à focalisation ponctuelle selon l'un des modes de réalisation décrits et comprenant en outre des moyens de modulation de l'état de polarisation du faisceau lumineux à cône creux et à focalisation ponctuelle et des moyens d'analyse de l'état de polarisation du faisceau lumineux réfléchi ou transmis par un échantillon.

L'invention trouvera une application particulièrement avantageuse en microspectrométrie Raman et en microellipsométrie.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1 représente une vue en coupe d'un dispositif d'éclairage selon un premier mode de réalisation de l'invention et dans une première position de réglage du faisceau d'éclairage, ainsi qu'un tracé de rayons du faisceau d'illumination;
- la figure 2 représente une vue en perspective d'un faisceau lumineux à cône creux focalisé en un point ;
- la figure 3 représente une vue en coupe d'un dispositif d'éclairage selon le premier mode de réalisation de l'invention, dans une seconde position de réglage du faisceau d'éclairage, ainsi qu'un tracé de rayons du faisceau d'illumination ;
- la figure 4A représente un dispositif d'éclairage selon un second mode de réalisation de l'invention et dans une première position de réglage du système optique d'éclairage, ainsi qu'un tracé de rayons du faisceau d'illumination ;
- la figure 4B représente schématiquement un diagramme d'éclairement du faisceau d'illumination du dispositif de la figure 4A dans un plan transverse à l'axe optique;
- la figure 5A représente le dispositif d'éclairage de la figure 4A dans une deuxième position de réglage du système optique d'éclairage, ainsi qu'un tracé de rayons du faisceau d'illumination ;

- la figure 5B représente schématiquement un diagramme d'éclairement du faisceau d'illumination du dispositif de la figure 5A dans un plan transverse à l'axe optique ;
- la figure 6 représente une vue en coupe d'un dispositif d'éclairage et de collecte de faisceau selon un mode de réalisation préféré de l'invention ;
- la figure 7A-7B représente schématiquement une vue en coupe du faisceau d'éclairage à cône creux focalisé en un point sur un échantillon respectivement pour différentes tailles de faisceau ;
- la figure 8 représente une partie d'un dispositif d'éclairage et de collecte du faisceau diffusé selon un mode de réalisation de l'invention ;
- la figure 9 représente une partie d'un dispositif d'éclairage et de collecte du faisceau diffusé selon un autre mode de réalisation de l'invention ;
- les figures 10A-10B représentent schématiquement les composantes du champ électrique respectivement selon les polarisations p et s ;
- la figure 11 représente une simulation de la réflectance pour les composantes de polarisation p et s du champ électrique en fonction de l'angle d'incidence pour un échantillon ;
- la figure 12 représente une partie d'un dispositif d'éclairage polarisé à cône creux selon un mode de réalisation particulier de l'invention ;
- la figure 13 représente schématiquement le fonctionnement d'un convertisseur de polarisation cartésien-cylindrique utilisé dans un microellipsomètre ou micropolarimètre dans un mode de réalisation non revendiqué de l'invention ;
- la figure 14 représente schématiquement un microellipsomètre selon un premier mode de réalisation non revendiqué de l'invention ;
- la figure 15 représente schématiquement un microellipsomètre selon un second mode de réalisation non revendiqué de l'invention ;
- la figure 16A représente un dispositif TERS selon l'art antérieur, la figure 16B représente un dispositif TERS couplé à un système d'éclairage ponctuel à cône creux dans un microscope inversé et la figure 16C représente un dispositif TERS couplé à un système d'éclairage ponctuel à cône creux dans un microscope inversé.

Le dispositif et le procédé de l'invention reposent sur l'utilisation d'un système optique d'éclairage comprenant une pluralité d'axicons et plus précisément au moins deux lentilles coniques. Une lentille conique est un composant optique généralement en verre comprenant une première face conique et une deuxième face qui peut être plane, sphérique concave ou sphérique convexe. Une lentille plan-conique peut être définie par le demi angle $\alpha$ au sommet de sa face conique. Un axicon est un composant optique de symétrie cylindrique qui image un point source sur une ligne de focalisation le long de l'axe optique et non pas en un point unique de focalisation dans un seul plan focal image. L'utilisation d'un axicon est connue pour accroître la profondeur de champ d'un faisceau laser. La combinaison d'une lentille conique et d'une lentille sphérique permet aussi de focaliser un faisceau collimaté sur un anneau.

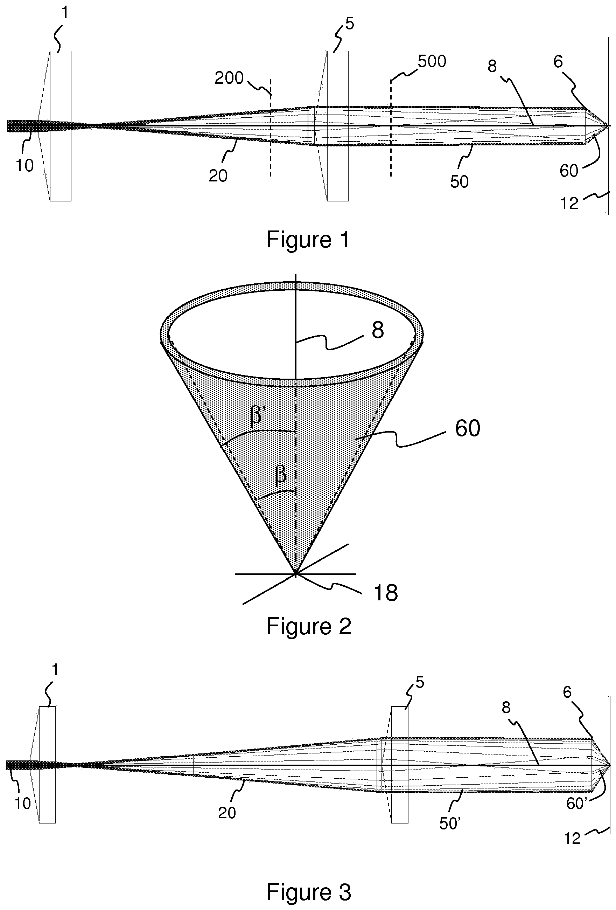

La figure 1 représente une vue en coupe d'une partie d'un dispositif optique d'éclairage ou d'illumination selon un premier mode de réalisation de l'invention. Le dispositif optique d'éclairage est disposé suivant l'axe optique 8 d'un objectif de microscope 6. Sur la figure 1, le faisceau lumineux incident est représenté par le tracé de quelques rayons optiques représentatifs de l'ouverture du faisceau d'illumination. Le dispositif d'éclairage est couplé à une source de lumière (non représentée) et à des moyens optiques pour former un faisceau incident collimaté, et plus précisément un faisceau incident cylindrique à fond clair 10. Le dispositif d'éclairage comprend une première lentille axicon 1, une deuxième lentille axicon 5 et un objectif optique 6 pour focaliser le faisceau d'éclairage dans le plan de focalisation 12 qui est un plan transverse à l'axe optique 8. La source de lumière a de préférence une faible étendue géométrique de manière à ce que le faisceau incident 10 soit aussi peu divergent que possible et de manière à ce que l'image de la source à travers le dispositif d'éclairage ait une dimension micrométrique dans le plan focal 12 de l'objectif 6. Dans un exemple de réalisation, on utilise un faisceau laser 10 de 2mm de diamètre avec une divergence de 1 mrad. Le dispositif ne comporte pas de diaphragme de champ, car il ne vise pas à éclairer tout le champ de l'objectif mais seulement un point dans le plan focal de l'objectif. La première lentille axicon 1 est de préférence centrée sur l'axe optique 8, la face conique de la première lentille axicon 1 étant disposée de préférence vers le faisceau incident 10 collimaté. La lentille axicon 1 dévie le faisceau incident 10 et forme un faisceau lumineux conique 20 divergent qui n'est pas focalisé en un point focal. L'angle de déviation du faisceau conique 20 dépend de l'angle au sommet et de l'indice de réfraction du matériau de la première lentille conique 1. Dans un plan 200 transverse à l'axe optique 8, le faisceau conique 20, en sortie de la première lentille conique 1 présente une zone centrale sombre, entourée d'une zone annulaire lumineuse. Toutefois, le faisceau conique 20 n'est pas focalisé en un point mais au mieux suivant une ligne de focalisation sur l'axe optique : en effet le faisceau lumineux conique 20 est défini par un cône intérieur et un cône extérieur dont les sommets respectifs ne sont pas confondus en un point commun mais sont séparés spatialement. La deuxième lentille conique 5 est dans le schéma de la figure 1 centrée sur l'axe optique 8. La face conique de la deuxième lentille conique 5 est par exemple disposée vers le faisceau d'éclairage conique 20. La deuxième lentille conique 5 dévie le faisceau conique 20 à centre sombre et forme un faisceau lumineux cylindrique à fond noir 50, c'est-à-dire un faisceau lumineux annulaire collimaté 50. Dans un plan 500 transverse à l'axe optique 8, le faisceau cylindrique à fond noir 50, en sortie de la deuxième lentille conique 5 présente une zone centrale sombre, entourée d'une zone annulaire lumineuse, de diamètres intérieur et extérieur constants quel que soit le plan 500 transverse à l'axe optique 8 entre la deuxième lentille conique 5 et l'objectif 6. L'objectif 6 est par exemple un objectif de microscope. L'objectif 6 reçoit le faisceau cylindrique à fond noir 50 et le focalise dans son plan focal image 12 en un point. Ainsi, le dispositif optique d'illumination forme un faisceau d'éclairage 60 à cône creux focalisé en un point. La dimension du point image de la source dépend de l'étendue de la source et du grandissement du système d'éclairage. L'étendue géométrique de la source influe non seulement sur la taille du spot mais aussi sur "l'épaisseur" de l'anneau du faisceau cylindrique 50. C'est pourquoi nous utilisons de préférence une source laser collimatée ou encore une source blanche de faible entendue géométrique. Lorsque le système optique d'éclairage est parfaitement aligné sur l'axe optique 8, le point éclairé est confondu avec le point focal de l'objectif 6. Le faisceau à cône creux 60 détermine la gamme d'angle d'incidence du faisceau d'illumination dans le plan focal 12, au point de focalisation du faisceau. Cette gamme d'angle d'incidence dépend notamment des caractéristiques de la première lentille conique 1 et de la deuxième lentille conique 5.

La figure 2 représente schématiquement un faisceau lumineux 60 conoscopique à cône creux et à focalisation ponctuelle obtenu au moyen du dispositif d'éclairage de la figure 1. La zone grisée correspond au cône creux de lumière et se situe entre un premier cône d'angle au sommet β et un second cône d'angle au sommet β'. Le premier et le second cône sont de préférence coaxiaux, ont un même et unique sommet et des angles au sommet respectifs β et β' différents. Le point de focalisation 18 du faisceau lumineux 60 est confondu avec le sommet des deux cônes. La gamme d'angle d'incidence du faisceau lumineux d'éclairage au point 18 est donc comprise entre les angles β et β'.

Nous allons maintenant exposer une manière simple de faire varier la gamme d'angle d'incidence du faisceau d'éclairage à cône creux, sans changement de composant optique.

La figure 3 représente un dispositif optique d'éclairage utilisant les mêmes composants optiques que le dispositif représenté sur la figure 1, en particulier les mêmes lentilles coniques 1 et 5. Le dispositif de la figure 3 diffère uniquement de celui de la figure 1 par la position axiale de la deuxième lentille conique 5, la position axiale de la première lentille conique 1 et de l'objectif 6 restant fixes, ce qui permet de conserver un plan de focalisation 12 fixe et un point de focalisation 18 fixe. Le dispositif de la figure 3 comprend par exemple des moyens de déplacement axial de la deuxième lentille conique 5 parallèlement à l'axe optique 8. L'ouverture du faisceau incident 10 est également identique à celle du faisceau incident du dispositif de la figure 1. Le fonctionnement du dispositif de la figure 3 est identique à celui de la figure 1. Toutefois, la deuxième lentille conique 5 étant éloignée de la première lentille conique 1, la deuxième lentille conique 5 intercepte le faisceau d'éclairage conique 20 dans un plan où son diamètre est plus grand que dans le réglage axial de la figure 1. La deuxième lentille conique 5 forme ainsi un faisceau lumineux cylindrique à fond noir 50', ou encore un faisceau lumineux annulaire collimaté 50' de diamètre supérieur au diamètre du faisceau lumineux cylindrique à fond noir 50 de la figure 1. Par conséquent, l'objectif 6 forme un faisceau conique creux 60' ayant une gamme d'angle d'incidence supérieure à la gamme d'angle d'incidence du faisceau conique creux 60 de la figure 1. Le déplacement axial de la deuxième lentille conique 5 entraîne une modification du diamètre du faisceau cylindrique 50' à fond sombre. On obtient ainsi, par simple déplacement axial de la deuxième lentille conique 5, un dispositif d'éclairage conique creux ayant un angle d'incidence variable tout en conservant un point de focalisation fixe.

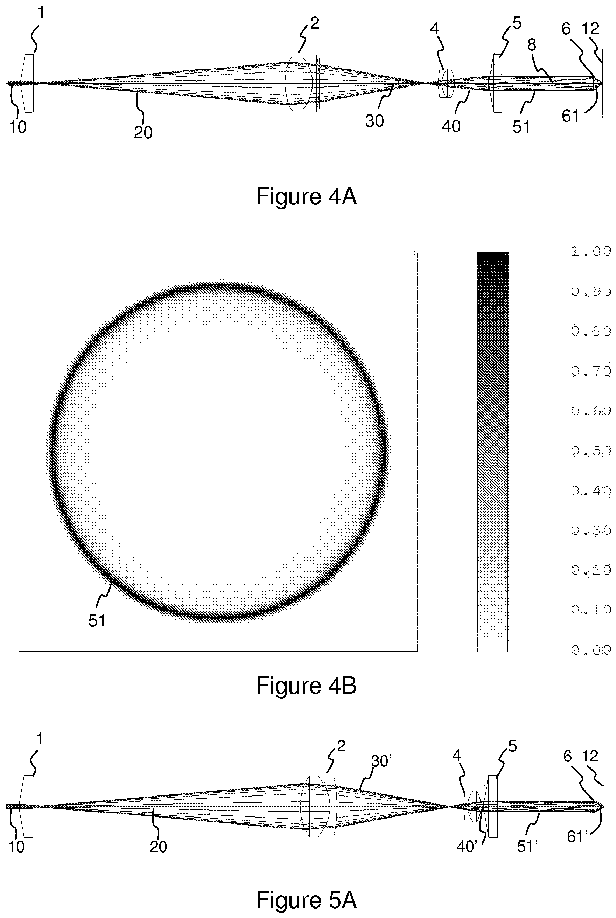

La figure 4A représente un dispositif d'éclairage selon un second mode de réalisation de l'invention et dans une première position de réglage du système optique d'éclairage, ainsi qu'une simulation de tracé de rayons lumineux du faisceau d'illumination se propageant dans le dispositif d'éclairage. Dans ce second mode de réalisation, le dispositif d'éclairage comprend deux lentilles axicons 1 et 5, ainsi qu'un système optique afocal à deux lentilles sphériques 2 et 4 et des moyens de déplacement axial du système afocal parallèlement à l'axe optique 8. Plus précisément, le dispositif optique d'éclairage comprend une première lentille conique 1 centrée sur l'axe optique 8. La lentille conique 1 dévie le faisceau incident 10 et forme un faisceau lumineux conique creux 20 qui n'est pas focalisé en un point focal. Dans un plan transverse à l'axe optique 8, le faisceau conique 20, en sortie de la première lentille conique 1 présente une zone centrale sombre, entourée d'une zone annulaire lumineuse. Toutefois, le faisceau conique 20 n'est pas focalisé en un point mais au mieux suivant une ligne de focalisation sur l'axe optique. Le dispositif d'éclairage représenté sur la figure 4A comprend aussi un système optique afocal formé de deux lentilles sphériques, le plan focal image de la première lentille sphérique 2 étant confondu avec le plan focal objet de la deuxième lentille sphérique 4. La première lentille sphérique 2 reçoit le faisceau conique 20 de la première lentille conique 1. La première lentille sphérique 2 forme un faisceau lumineux focalisé 30 dans le plan focal image de la première lentille sphérique 2 sous la forme d'un éclairage annulaire à centre sombre. La deuxième lentille sphérique 4 reçoit le faisceau d'éclairage annulaire 30 et forme un faisceau conique 40 non focalisé en un point mais comme le faisceau 20 suivant une ligne de focalisation axiale. Dans un plan transverse à l'axe optique 8, le faisceau conique 40, en sortie de la deuxième lentille sphérique 4 présente une zone centrale sombre, entourée d'une zone annulaire lumineuse. Le système optique afocal formé des deux lentilles sphériques 2, 4 permet ainsi d'augmenter ou respectivement de réduire la taille du faisceau conique tout en réduisant ou respectivement en augmentant son ouverture. Le dispositif d'éclairage de la figure 4A comprend une deuxième lentille conique 5 centrée sur l'axe optique 8. La deuxième lentille conique 5 dévie le faisceau conique 40 à centre sombre et forme un faisceau lumineux cylindrique à fond noir 51, c'est-à-dire un faisceau lumineux annulaire collimaté 51. Dans un plan transverse à l'axe optique 8, le faisceau cylindrique à fond noir 51, en sortie de la deuxième lentille conique 5 présente une zone centrale sombre, entourée d'une zone annulaire lumineuse, de diamètres intérieur et extérieur constant quel que soit le plan transverse. Le dispositif d'éclairage de la figure 4A comprend aussi un objectif optique 6 qui est par exemple un objectif de microscope. L'objectif optique 6 reçoit le faisceau cylindrique à fond noir 51 et le focalise dans son plan focal image 12. De cette manière, on obtient, dans le plan focal de l'objectif 6, un faisceau d'illumination à cône creux 61 focalisé en un point. Lorsque le système optique d'éclairage est parfaitement aligné sur l'axe optique, le point éclairé est le point focal de l'objectif 6.

La figure 4B représente le diagramme d'éclairement du dispositif de la figure 4A en sortie de la deuxième lentille conique 5 dans un plan transverse à l'axe optique 8, c'est-à-dire le diagramme d'éclairement du faisceau 51. La partie en noir sur la figure 4B correspond à un éclairement maximum et la partie en blanc sur la figure 4B correspond à un éclairement nul. On observe sur la figure 4B l'éclairement annulaire du faisceau 51 avec un anneau lumineux et un centre sombre. Dans l'exemple de simulation de la figure 4B, le diamètre extérieur du faisceau cylindrique 51 à centre sombre est de 6.4 mm. L'objectif 6 est ici un objectif de microscope x40. Le faisceau focalisé sur l'échantillon 11 présente un angle d'incidence d'environ 52 degrés.

La figure 5A représente le même mode de réalisation que le dispositif d'éclairage de figure 4A, pour une autre position axiale du système afocal, avec une simulation de tracé de rayons. Comparé au dispositif de la figure 4A, le système afocal est rapprochée à quelques mm de la deuxième lentille conique 5. De manière analogue au dispositif de la figure 4A, le dispositif d'éclairage de la figure 5A génère un faisceau d'éclairage 51' cylindrique à fond sombre. Toutefois, le déplacement axial du système afocal entraîne une modification du diamètre du faisceau cylindrique 51' à fond sombre et par conséquent une modification de l'angle d'incidence du faisceau lumineux à cône creux 61' focalisé au point focal de l'objectif 6.

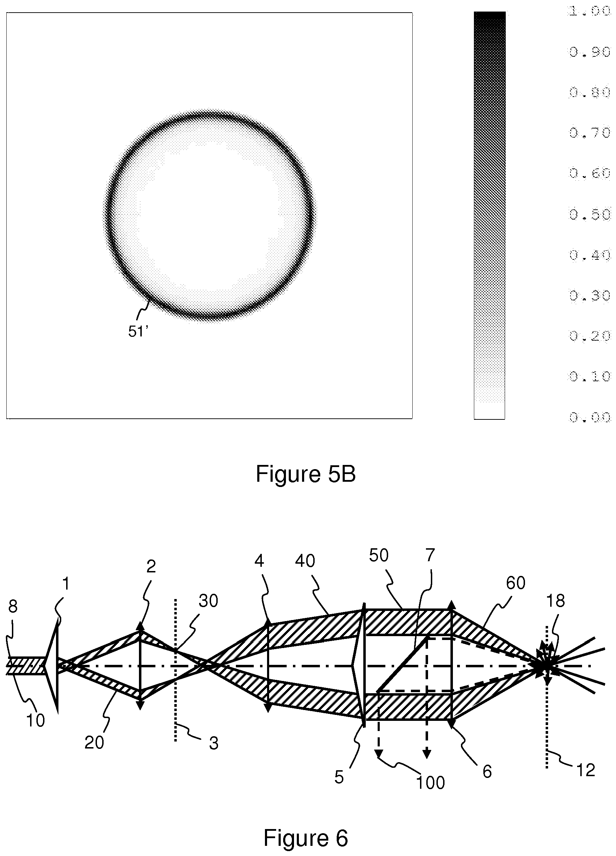

La figure 5B représente le diagramme d'éclairement du dispositif de la figure 5A en sortie de la deuxième lentille conique 5 dans un plan transverse à l'axe optique 8, c'est-à-dire le diagramme d'éclairement du faisceau 51'. Sur la figure 5B, le diagramme d'éclairement présente un anneau lumineux (représenté en noir) et un centre sombre (représenté en blanc). Sur la figure 5B, le diamètre de l'anneau du faisceau lumineux 51' est de 3.9 mm. Avec le même objectif 6 de microscope x40, on obtient un faisceau focalisé au point 18 dans le plan focal 12 de l'objectif 6 sous un angle d'incidence d'environ 38 degrés.

On observe qu'une variation de diamètre du faisceau lumineux cylindrique à fond noir 50, 51, 51' se traduit en une variation de l'angle d'incidence du faisceau d'éclairage 60 sur l'échantillon 11. Le dispositif d'éclairage représenté sur les figures 4A et 5A permet donc d'obtenir un faisceau d'éclairage à fond sombre et d'angle d'incidence variable par déplacement de la deuxième lentille conique 5. La variation continue de l'angle d'incidence du faisceau d'éclairage 60 peut ainsi être obtenue sans changement de composant optique du dispositif d'éclairage et sans changement du point de focalisation du faisceau d'éclairage 60. D'autre part, le déplacement axial du système afocal à lentilles sphériques 2, 4 permet de faire varier l'épaisseur du « tube » lumineux du faisceau d'éclairage 51, 51'. Sur les figures 4A et 5A, le système afocal est représenté sur le trajet optique entre la première lentille axicon 1 et la deuxième lentille axicon 5. Toutefois, dans d'autres modes de réalisation, le système afocal pourrait être placé en amont de la première lentille axicon 1 ou en aval de la deuxième lentille axicon 5.

Le dispositif d'éclairage illustré sur les figures 1, 3, 4A ou 5A permet donc d'obtenir un faisceau d'éclairage à cône creux focalisé en un point et à angle d'incidence variable. De plus, ce dispositif d'éclairage n'utilise pas d'obturateur central ce qui permet de conserver la majeure partie de l'intensité du faisceau lumineux incident jusqu'au point de focalisation 18.

L'utilisation de moyens de déplacement axial du système afocal et de moyens de déplacement axial de la deuxième lentille axicon permet de faire varier non seulement l'angle d'incidence du faisceau 60, 61, 61' à cône creux focalisé en un point et mais aussi de faire varier la gamme angulaire β-β' du faisceau d'illumination ponctuel à cône creux en fonction des applications.

Dans un exemple de réalisation, on utilise une source laser et un objectif de microscope de grandissement X50 et d'ouverture numérique égale à 0,95. Le diamètre de pupille est estimé à environ 8 mm. Le dispositif permet de faire varier le diamètre du « tube » laser d'environ 4 mm à 8 mm, soit une variation d'angle d'incidence au point de focalisation comprise entre environ 30 degrés et plus de 70 degrés avec l'objectif 50X/0.95. La largeur angulaire (c'est-à-dire la différence β'-β) du faisceau à cône creux et à focalisation ponctuelle varie respectivement de 2 degrés à moins de 5 degrés en fonction de l'angle d'incidence. Le spot au point de focalisation 18 est de taille micrométrique.

La figure 6 représente schématiquement un dispositif d'illumination d'un échantillon et de collecte d'un signal optique rétro diffusé selon un mode de réalisation préféré de l'invention. Le dispositif optique d'éclairage en transmission est disposé suivant un axe optique 8. Comme expliqué plus haut en lien avec la figure 1, 3, 4A ou 5A, le dispositif d'éclairage transforme le faisceau incident 10 cylindrique à fond clair en un faisceau d'éclairage 50 cylindrique à fond sombre, et le focalise en un faisceau à cône creux 60 en un point 18. Le dispositif comprend une première lentille conique 1, une deuxième lentille conique 5, un objectif 6 et un système afocal comprenant une première lentille sphérique 2 et une deuxième lentille sphérique 4, le plan focal image 3 de la première lentille sphérique étant confondu avec le plan focal objet de la deuxime lentille sphérique 4. Un échantillon à analyser est de préférence placé dans le plan focal 12 de l'objectif 6. Sur la figure 6, le volume du faisceau lumineux d'éclairage est représenté schématiquement par des hachures. Le dispositif optique d'éclairage reçoit un faisceau lumineux collimaté 10 provenant par exemple d'une source laser (non représentée). Les mêmes signes de référence indiquent les mêmes éléments sur la figure 6 et sur les figures 1 à 5. Le dispositif de la figure 6 permet de focaliser un faisceau lumineux d'éclairage 60 à cône creux en un point 18 dans le plan focal image de l'objectif 6.

La figure 6 représente aussi un dispositif optique pour collecter la lumière rétro diffusée 100 dans un cône autour de l'axe optique du faisceau d'éclairage 60. Le dispositif optique de collecte du signal diffusé, par exemple de diffusion Raman, comprend un miroir 7 disposé entre l'objectif 6 et la deuxième lentille conique 5. Le miroir 7 est par exemple un miroir plan. Alternativement, le miroir 7 peut être miroir sphérique ou asphérique destiné à focaliser directement le faisceau collecté 100 sur un spectromètre. Le miroir de collecte 7 a un diamètre extérieur inférieur au diamètre intérieur du faisceau lumineux cylindrique à fond noir 50 de manière à ne pas obturer le faisceau d'éclairage. Le miroir de collecte 7 reçoit un faisceau lumineux rétro-diffusé 100 autour de l'axe optique 8 dans le cône sombre du faisceau d'éclairage 50 et le dévie dans une direction traverse à l'axe optique 8. Dans d'autres modes de réalisation, le miroir de collecte 7 peut être situé entre l'échantillon 11 et l'objectif 6, dans le cône d'ombre du faisceau d'éclairage 60, ou encore entre le système optique afocal et la deuxième lentille conique 5 dans le cône d'ombre du faisceau conique 40. Toutefois, l'intérieur du faisceau cylindrique 60 correspond à l'emplacement où la zone sombre est la plus étendue, il est donc plus facile d'y insérer un miroir 7 de renvoi.

Dans une application préférée, le dispositif d'éclairage de la figure 6 est utilisé pour focaliser un faisceau laser d'excitation sur un échantillon 11 et le dispositif de collecte sert à collecter un signal de rétro-diffusion Raman. Le faisceau collecté 100 peut ensuite être filtré et focalisé sur la fente d'entrée d'un spectromètre Raman. Comme on le voit sur la figure 6, le miroir de collecte 7 est situé dans le cylindre central sombre du faisceau d'éclairage 50. De ce fait, le miroir de collecte 7 ne reçoit pratiquement pas de lumière par réflexion du faisceau laser d'éclairage sur l'échantillon 11. En effet, sur un échantillon 11 plan, le faisceau réfléchi est redirigé dans le cône d'illumination.

Le dispositif d'éclairage à fond sombre et de collecte représenté sur la figure 6 collecte un faisceau de rétro-diffusion qui, par construction, comprend très peu de réflexion du faisceau d'éclairage. Il n'est donc pas nécessaire de filtrer le faisceau collecté pour le séparer du faisceau d'éclairage, il suffit de filtrer la diffusion Rayleigh. Il est alors possible d'effectuer des mesures de spectrométrie Raman en utilisant un filtre réjecteur ayant des propriétés de réjection moyennes (par exemple une densité 4 au lieu de 6), puisqu'il suffit de filtrer spectralement le faisceau collecté 100 pour séparer la diffusion Raman de la diffusion Rayleigh à la longueur d'onde du laser. Le dispositif d'éclairage et de collecte de la figure 1 permet aussi d'obtenir plus facilement des signaux Raman basse fréquence, c'est-à-dire proches de la longueur d'onde du laser d'éclairage, sans requérir l'utilisation d'un filtre réjecteur à faible largeur de bande spectrale et à fort taux de réjection (par exemple 10 cm$^{-1}$ au lieu de 50 cm$^{-1}$), comme les filtres notch utilisés jusqu'à présent pour les applications de spectrométrie Raman basse fréquence.

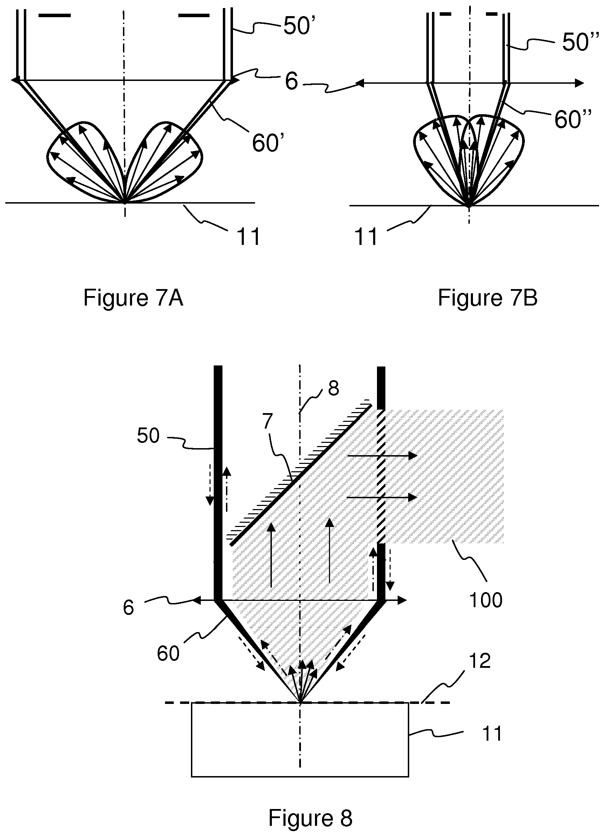

Le dispositif d'éclairage ponctuel à cône creux et à angle d'incidence variable permet de nouvelles applications, par exemple en microspectrométrie Raman. La figure 7A représente schématiquement une première configuration d'un dispositif d'éclairage ponctuel à cône creux, dans lequel le diamètre extérieur du faisceau lumineux cylindrique à fond noir 50' correspond pratiquement à l'ouverture maximum de l'objectif 6. Le faisceau lumineux 60' éclaire l'échantillon 11 sous un angle d'incidence moyen correspondant à l'ouverture numérique de l'objectif 6. L'angle d'incidence du faisceau d'éclairage 60' est par exemple de 52 degrés, comme décrit en lien avec la figure 4A. La figure 7B représente schématiquement une seconde configuration du dispositif d'éclairage ponctuel à cône creux, dans lequel le diamètre extérieur du faisceau lumineux cylindrique à fond noir 50" correspond pratiquement à la moitié de l'ouverture maximale de l'objectif 6. Par conséquent, le faisceau lumineux 60" éclaire l'échantillon 11 sous un angle d'incidence moyen correspondant à la moitié de l'ouverture numérique de l'objectif 6. L'angle d'incidence du faisceau d'éclairage 60" est par exemple de 38 degrés, comme décrit en lien avec la figure 5A. Sur les figures 7A et 7B, les flèches représentent schématiquement la figure de diffusion de l'échantillon soumis à un faisceau d'éclairage ponctuel à cône creux. L'enveloppe de la figure de diffusion est représentée schématiquement par une courbe entourant les flèches de diffusion. La variation d'angle d'incidence du faisceau d'éclairage peut ainsi être utilisée pour sonder un échantillon sous différents angles d'incidence. La microspectrométrie Raman sous incidence variable peut être fonction des propriétés de l'échantillon 11, comme par exemple sa rugosité de surface. Le dispositif d'éclairage de l'invention offre ainsi de nouvelles applications de la microspectrométrie Raman sous angle d'incidence variable, qui peut fournir des informations jusque là inaccessibles sur les échantillons à analyser. En effet, dans l'art antérieur, la microspectrométrie Raman ne fournit pas une résolution angulaire en fonction de l'angle d'incidence.

La figure 8 représente schématiquement une partie d'un dispositif d'éclairage et de collecte d'un signal de diffusion selon un mode de réalisation similaire à celui détaillé en lien avec la figure 6. La figure 8 représente plus précisément le faisceau lumineux cylindrique à fond noir 50 focalisé par l'objectif optique 6 sur l'échantillon 11 en un point dans le plan focal image de l'objectif 6. Le trajet optique du faisceau lumineux d'éclairage 50, 60 est représenté sur la figure 8 en trait noir épais. Les flèches en tirets représentent schématiquement le sens de propagation du faisceau d'éclairage à la longueur d'onde du laser. Les flèches traits tiret-point représentent schématiquement le sens de propagation du faisceau réfléchi spéculairement par l'échantillon 11 à la longueur d'onde du laser. Les flèches en trait plein représentent schématiquement le sens de propagation du faisceau diffusé par l'échantillon 11 collecté par le miroir 7 et dévié dans une direction transverse, par exemple vers un spectromètre. Le faisceau diffusé comprend une part de diffusion Rayleigh et une part de diffusion Raman. Le faisceau diffusé collecté 100 est représenté sur la sur la figure 8 par une zone hachurée. On constate sur la figure 8 que la réflexion spéculaire sur l'échantillon se superpose au faisceau d'éclairage cylindrique à centre sombre, mais ne s'étend pas dans le cône sombre. De ce fait, le miroir de collecte 7 reçoit uniquement un faisceau 100 provenant de la diffusion sur l'échantillon. Le dispositif d'éclairage et de collecte représenté sur la figure 8 effectue donc par construction un filtrage très efficace de la lumière réfléchie à la longueur d'onde du laser. Or l'intensité du signal réfléchi à la longueur d'onde du laser est généralement très supérieure à l'intensité du faisceau de diffusion Rayleigh et du faisceau de diffusion Raman. Pour extraire le signal Raman du faisceau de diffusion collecté 100, il n'est pas nécessaire de filtrer le faisceau laser réfléchi sur l'échantillon, mais uniquement la diffusion Rayleigh. Grâce au dispositif d'éclairage et de collecte de l'invention, le filtrage du faisceau collecté 100 est plus aisé. Un filtre ayant un taux de réjection moyen (cf plus haut) peut suffire pour obtenir des mesures de spectrométrie Raman. D'autre part, le dispositif d'éclairage et de collecte peut avantageusement être utilisé pour des mesures de spectrométrie Raman basse fréquence.

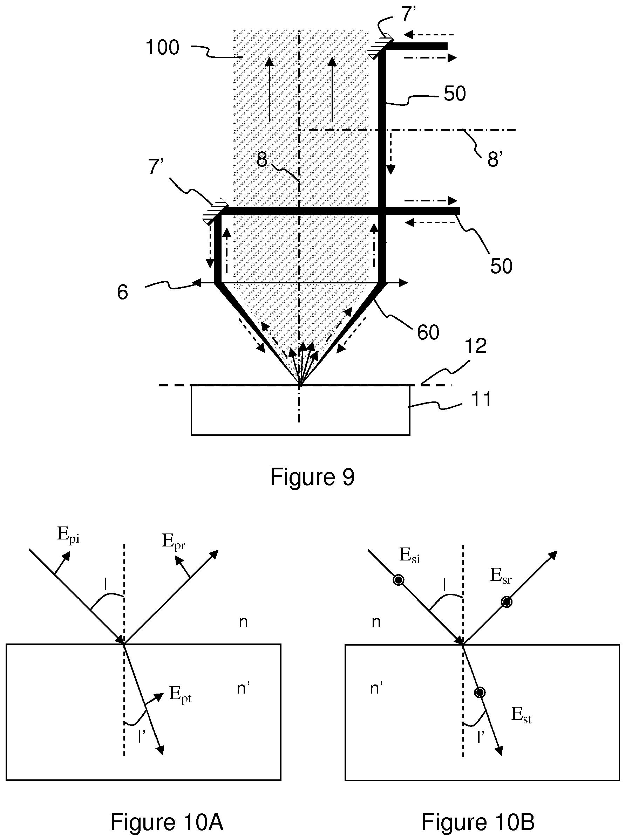

La figure 9 représente schématiquement une partie d'un dispositif d'éclairage et de collecte du signal selon un second mode de réalisation de l'invention. De même que sur la figure 8, le trajet optique du faisceau lumineux d'éclairage 50, 60 est représenté en trait noir épais; le faisceau diffusé collecté 100 est représenté par une zone hachurée ; les flèches en tirets représentent le sens de propagation du faisceau d'éclairage à la longueur d'onde du laser ; les flèches traits tiret-point représentent le sens de propagation du faisceau réfléchi spéculairement par l'échantillon 11 à la longueur d'onde du laser et les flèches en trait plein représentent schématiquement le sens de propagation du faisceau diffusé par l'échantillon 11. Le dispositif d'éclairage comprend une première lentille conique, un système optique afocal et une deuxième lentille conique (non représentés) disposés de manière à générer un faisceau lumineux cylindrique à fond noir 50. Le faisceau d'éclairage se propage dans d'une direction généralement transverse à la normale à l'échantillon 11. Le dispositif d'éclairage de la figure 9 comprend en outre un miroir 7' disposé entre la deuxième lentille conique 5 et l'objectif 6. Le miroir 7' est incliné par rapport à l'axe du faisceau lumineux cylindrique à fond noir 50 de manière à dévier celui-ci en direction de l'objectif de focalisation 6. L'objectif 6 focalise le faisceau lumineux à cône creux 60 en un point sur l'échantillon 11 de manière à produire un éclairage conique ponctuel à cône creux. Le faisceau de diffusion 100 est généré par diffusion sur l'échantillon 11. Le faisceau diffusé 100 est collecté par l'objectif 6 pour être transmis vers un spectromètre et/ou un détecteur imageur. Le miroir 7' est de préférence de forme annulaire ou elliptique et comporte une ouverture centrale de dimension suffisante pour laisser passer le faisceau diffusé 100 autour de la normale à l'échantillon 11. Le dispositif de la figure 9 permet de collecter le signal rétro diffusé dans le cône d'ombre du faisceau lumineux cylindrique à fond noir 50. De même que dans le dispositif de la figure 8, le faisceau diffusé collecté 100 est pratiquement exempt de réflexion spéculaire du faisceau d'éclairage sur l'échantillon 11. Le dispositif de la figure 9 permet également d'éviter l'utilisation de filtres réjecteur coûteux à fort taux de réjection et peut permettre d'effectuer des mesures de spectrométrie Raman basse fréquence.

Le dispositif d'éclairage ponctuel à cône creux, par exemple suivant les figures 6 à 9 permet d'envisager de nouvelles applications de microspectrométrie Raman.

Une première catégorie d'applications concerne la technique dite SERS, pour Surface Enhanced Raman Scattering, dans laquelle on dépose sur un support des particules de métaux nobles, tels que l'or ou l'argent, sur lesquelles se fixent des molécules à analyser. La couche d'or permet d'amplifier le signal Raman. La polarisation et l'angle d'incidence du faisceau d'illumination peuvent jouer un rôle important dans l'amplification du signal Raman SERS. L'utilisation du dispositif d'illumination de l'invention pour l'analyse SERS peut permettre une amélioration de la sensibilité de la technique SERS.

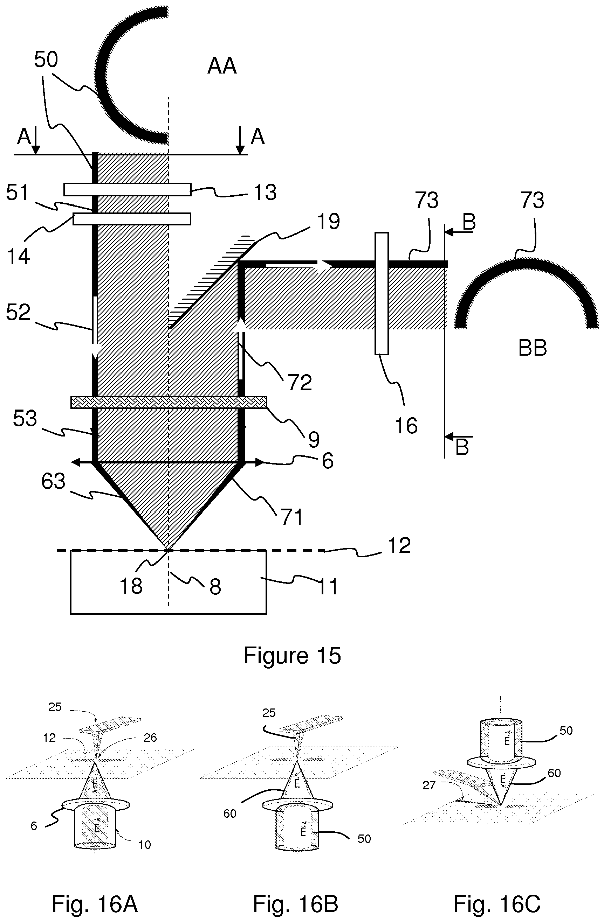

Une autre catégorie d'applications concerne les techniques dites TERS (Tip Enhanced Raman Scattering), qui utilisent l'amplification locale du signal Raman d'un échantillon induite à proximité d'une pointe AFM (Atomic Force Microscope) sous l'influence d'un faisceau laser focalisé 26 sur cette pointe AFM. La condition pour générer un effet TERS est que le champ électromagnétique du faisceau laser doit être parallèle à la pointe AFM. Certains systèmes ne remplissent pas cette condition, par exemple les microscopes inversés (cf Figure 16A) pour lesquels le faisceau laser conique à cône plein 10 arrive droit sur l'échantillon dans le plan focal 12 de l'objectif 6 et sur la pointe AFM 25 (champ électromagnétique perpendiculaire). Deux solutions sont généralement mises en œuvre pour résoudre ce problème : utiliser un faisceau laser à polarisation radiale et des objectifs à grande ouverture numérique. La figure 16A représente schématiquement un microscope inversé couplé à une pointe 25 (par exemple une pointe AFM), le faisceau d'éclairage 10 étant un faisceau laser plein focalisé dans le plan focal 12 d'un objectif 6. Le faisceau laser d'éclairage TERS est un faisceau laser de préférence à polarisation radiale et est focalisé à travers un échantillon transparent au voisinage de la pointe 25. On a représenté sur la figure 16A en grisé la partie centrale du faisceau laser et en blanc la partie externe du faisceau laser. La partie centrale du faisceau laser est la plus énergétique puisqu'elle concentre 90% de l'énergie du faisceau laser, tandis que la partie externe du faisceau laser classique correspond à moins de 10% de l'énergie. Ces techniques permettent de générer un champ électromagnétique parallèle à la pointe AFM, mais seulement pour les rayons externes du faisceau laser les plus éloignés de l'axe optique. En effet, comme indiqué sur la figure 16A, la partie intérieure du faisceau laser ne contribue pas à l'exaltation TERS car le champ électromagnétique n'y est pas parallèle à la pointe. De plus, ce type de faisceau (tel que sur la fig. 16A) génère un échauffement de l'échantillon et de la pointe pouvant entraîner leur destruction. Les figures 16B et 16C représentent un microscope à pointe 25 couplé à un dispositif d'illumination ponctuel à cône creux. Sur la fig. 16B le microscope est inversé, et sur la fig. 16C le microscope est droit. Avantageusement, dans le cas d'un microscope inversé tel que représenté sur la fig. 16B, la pointe est disposée face au dispositif d'illumination ponctuel à cône creux, la pointe étant d'un côté de l'échantillon, et le dispositif d'illumination ponctuel à cône creux génère un faisceau lumineux à cône creux focalisé à travers un échantillon transparent sur l'extrémité de la pointe 25. Préférentiellement, dans le cas d'un microscope inversé, l'axe de la pointe 25 est aligné sur l'axe optique du faisceau lumineux conique 60. Avantageusement, dans le cas d'un microscope droit tel que représenté sur sur la fig. 16C, la pointe et le dispositif d'illumination ponctuel à cône creux sont disposés du même côté de l'échantillon et le dispositif d'illumination ponctuel à cône creux génère un faisceau lumineux à cône creux focalisé dans le plan de l'échantillon sur l'extrémité de la pointe 25. Préférentiellement, dans le cas d'un microscope droit, l'axe de la pointe 25 est situé en dehors du cône d'éclairement du faisceau lumineux conique 60. Sur les figures 16B et 16C, la partie grisée du faisceau 50, 60 correspond la partie la plus énergétique du faisceau laser à cône creux, tandis que la partie centrale blanche correspond à un éclairage pratiquement nul. Le système d'illumination ponctuel à cône creux de l'invention s'applique très avantageusement aux techniques TERS. En effet le système d'illumination à cône creux (tel que représenté sur les figures 16B et 16C) redistribue la majeure partie de l'énergie centrale du faisceau laser dans un cône creux (faisceau 50, 60) et évite un éclairage sur l'axe du faisceau laser. Les composantes du vecteur champ électromagnétique du faisceau laser deviennent majoritairement parallèles à la pointe AFM 25 : l'exaltation TERS est non seulement présente mais fortement augmentée, de l'ordre de 90% (cf Figure 16B). De plus, une même efficacité TERS peut ainsi être obtenue avec un faisceau laser d'éclairage beaucoup mois intense, puisqu'on utilise pratiquement toute l'énergie utile du faisceau. Un autre avantage du système de cône creux est de diminuer le rapport amplification TERS sur échauffement de l'échantillon et de la pointe, permettant d'utiliser un faisceau laser moins puissant pour une amplification donnée. Dans le cas du microscope droit, un aspect intéressant de la technique de cône creux est de libérer une partie du laser et donc d'éviter en grande partie l'ombre 27 créé par la pointe (fig. 16 C).

Les figures 10 à 15 concernent une autre application du dispositif d'éclairage ponctuel à cône creux en lumière polarisée, par exemple pour la spectrométrie Raman polarisée, la polarimétrie ou encore l'ellipsométrie. Les figures 10A et 10B représentent schématiquement les composantes du champ électrique d'une onde plane lumineuse respectivement selon les polarisations p et s. $E_{pi}$ représente la composante du champ électrique incident polarisée p, c'est-à-dire dans le plan d'incidence du faisceau ; $E_{pr}$ et $E_{pt}$ représentent les composantes du champ électrique respectivement réfléchie et transmise et polarisées p. $E_{si}$ , $E_{sr}$ et $E_{st}$ représentent les composantes du champ électrique respectivement incidente, réfléchie et transmise et polarisées s, c'est-à-dire perpendiculairement au plan d'incidence. Il est connu que le coefficient de réflexion d'un faisceau optique sur la surface d'un échantillon dépend de l'angle d'incidence et de l'état de polarisation du faisceau lumineux incident. Si I est l'angle d'incidence sur l'échantillon, et I' l'angle de réfraction du faisceau transmis, les formules de Descartes (équations I et II ci-dessous) donnent les coefficients de réflexion pour les polarisations p et s respectivement, en fonction des indices de réfraction du milieu incident (n) et du milieu de transmission (n') :

$$r_{es} = (n \times \cos (I) - n' \times \cos (I'))/ (n \times \cos (I) + n' \times \cos (I')) \qquad (I)$$

$$r_{ep} = (n' \times \cos (I) - n \times \cos (I'))/ (n' \times \cos (I) + n \times \cos (I')) \qquad (II)$$

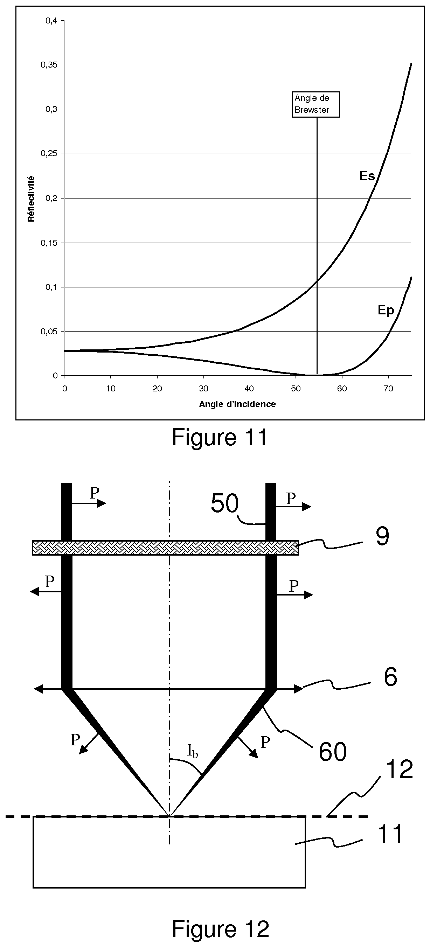

Certains matériaux présentent un angle de Brewster $I_b$ défini par $\tan(I_b) = n'/n$. Lorsque le faisceau lumineux est incident sous l'angle de Brewster, $I_b$, seule la composante du champ électrique $E_{rs}$ perpendiculaire au plan d'incidence est réfléchie. La réflexion de la composante du champ électrique $E_{rp}$ ayant une polarisation perpendiculaire au plan d'incidence est annulée à l'angle de Brewster. La figure 11 représente la réflectance pour les polarisation p et s respectivement pour un faisceau de lumière incident sur un échantillon. L'angle de Brewster dans ces conditions est d'environ 55 degrés.

Selon un mode de réalisation du dispositif d'éclairage de l'invention, le faisceau d'illumination à cône creux est focalisé en un point sur l'échantillon sous un angle d'incidence et avec une polarisation appropriés. Cette configuration permet de réduire considérablement la réflexion du faisceau d'éclairage, par exemple un faisceau laser, sur la surface de l'échantillon.

La figure 12 représente schématiquement une vue en coupe d'une partie d'un dispositif d'éclairage ponctuel à cône creux polarisé selon un troisième mode de réalisation non revendiqué de l'invention. Le dispositif d'éclairage comprend, comme décrit précédemment, un système optique comprenant une première lentille conique, une deuxième lentille conique, de manière à générer un faisceau cylindrique 50 à fond sombre, et un objectif 6 pour focaliser le faisceau d'éclairage 60 à fond sombre en un point dans le plan focal 12 sur l'échantillon 11, et éventuellement un système optique afocal basé sur deux lentilles sphériques. Le dispositif d'éclairage de la figure 12 comprend en outre un convertisseur de polarisation 9 disposé entre la deuxième lentille conique 5 et l'objectif 6, c'est-à-dire sur le trajet optique du faisceau d'éclairage cylindrique 50 à fond sombre. Le faisceau cylindrique 50 est de préférence polarisé linéairement suivant la direction p parallèle au plan de la figure 12. Sur la figure 12, les flèches représentent une composante d'un champ électrique polarisé P dans le plan de la figure 12. Toutefois, le faisceau d'éclairage présente une symétrie de révolution autour de l'axe optique 8. Pour obtenir le même état de polarisation quel que soit le plan d'incidence autour de l'axe optique 8, on utilise un convertisseur de polarisation 9 de type cartésien-cylindrique apte à recevoir un faisceau ayant une distribution d'état de polarisation spatialement uniforme et à le convertir en un faisceau ayant une distribution d'état de polarisation de symétrie cylindrique autour de l'axe optique.

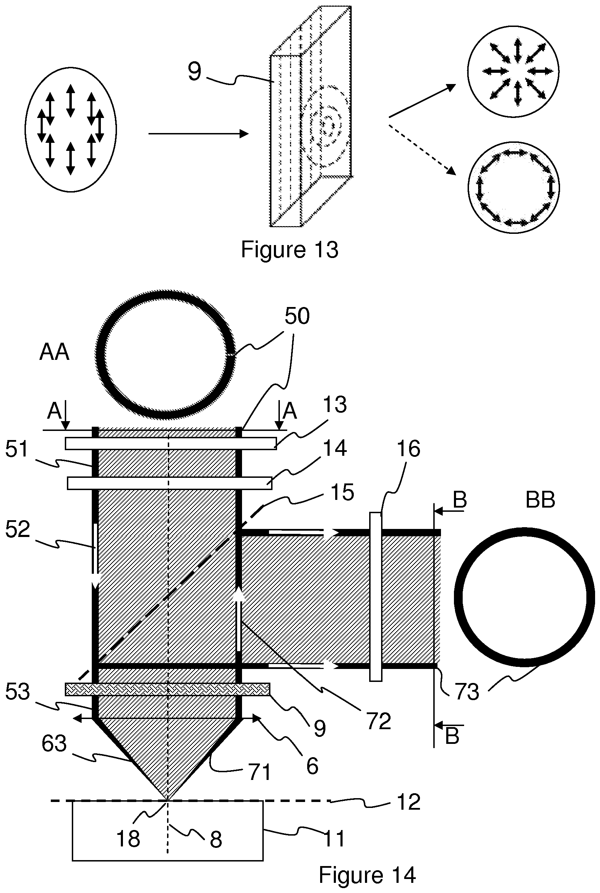

Le convertisseur de polarisation 9 est de préférence un convertisseur de distribution spatiale de polarisation, permettant de générer un faisceau ayant une distribution cylindrique d'état de polarisation, par exemple radiale ou azimutale commercialisé par la société Arcoptics par exemple (ou Z-Pol de Microlaser), ou encore un convertisseur de type cylindrique généralisé (ou CV beam en anglais). La figure 13 représente schématiquement le fonctionnement d'un convertisseur radial et azimutal de polarisation à cristaux liquides. Un faisceau incident est polarisé linéairement et de manière spatialement uniforme. Selon l'orientation de la polarisation linéaire d'entrée, qui est soit parallèle soit perpendiculaire à l'axe d'alignement des cristaux liquides sur la face d'entrée du convertisseur 9, on obtient en sortie du convertisseur un faisceau polarisé linéairement, mais présentant une distribution soit radiale de polarisation (en haut à droite de la figure 13) soit azimutale (en bas à droite de la figure 13). Pour ces deux distributions de polarisation, respectivement radiale et azimutale, l'état de polarisation est identique dans tout plan d'incidence autour de l'axe optique.

La demande de brevet FR1055839 décrit en détail la structure et le fonctionnement d'un convertisseur de distribution de polarisation cartésien-cylindrique généralisé. Ainsi, dans chaque plan d'incidence autour de l'axe optique, le faisceau focalisé sur l'échantillon est polarisé selon la direction P, parallèle au plan d'incidence. Dans chaque plan d'incidence autour de l'axe optique, on peut éclairer l'échantillon sous l'angle de Brewster et avec un état de polarisation P quel que soit le plan d'incidence. Il est alors possible d'annuler complètement la réflexion du faisceau laser dans tous les plans d'incidence. Or, comme expliqué plus haut, en spectrométrie Raman, il est très intéressant de limiter la collection du faisceau laser, car cela facilite le filtrage (c'est-à-dire la dissociation du faisceau Raman et du faisceau laser). Le dispositif d'éclairage polarisé de la figure 12 permet donc d'améliorer les performances du filtrage, par exemple pour effectuer des mesures de spectrométrie Raman à plus basse fréquence, ou d'utiliser un dispositif de filtrage moins performant et donc moins coûteux.

Un tel dispositif d'éclairage combiné à un composant polarisant de symétrie cylindrique s'applique avantageusement à un micro-ellipsomètre. En ellipsométrie, le changement de l'etat de polarisation est déterminé par les propriétés de l'échantillon (Epaisseur, Indice de réfraction). L'étude de ce changement de polarisation et notamment le rapport des réflectances pour les ondes polarisée P et S permet de remonter aux deux paramètres Tan($\psi$) et $\Delta$ (Rapport des deux coefficients de réflexion, et déphasage). En faisant varier l'angle d'incidence et/ou la longueur d'onde, et en mesurant ces deux paramètres ($\psi$ et $\Delta$), il est possible de remonter aux propriétés de l'échantillon (par exemple épaisseur et indice).

Il existe différentes méthodes d'ellipsométrie « ponctuelle » :

- l'ellipsométrie laser a pour avantage de permettre d'obtenir un point de focalisation très petit (haute résolution spatiale) et une grande intensité lumineuse (haute sensibilité). Mais l'ellipsométrie laser est limité monochromatiquement (typiquement de une à trois raies lasers), et donc ne permet d'obtenir qu'un nombre de couple limité Tan($\psi$) et $\Delta$ par mesure (et par angle d'incidence) ;
- l'ellipsométrie spectroscopique utilise une source spectralement large et continue ou «continuum », qui permet de mesurer un couple Tan($\psi$) et $\Delta$ pour chaque longueur d'onde en une seule fois (pour un angle d'incidence) mais qui ne permet pas d'atteindre un point de focalisation aussi petit que l'ellipsométrie laser (typiquement minimum 20$\mu$m) et ne donne pas accès à une grande intensité lumineuse.

Le dispositif d'éclairage de la figure 12 couplé à un microscope standard, permet non seulement de conjuguer les avantages de la microscopie et de l'ellipsométrie mais aussi de conjuguer la mesure ellipsométrique à une analyse en microscopie optique classique et également une analyse en spectroscopie moléculaire (Raman, fluorescence, PL...).

La figure 14 représente schématiquement une vue en coupe d'un dispositif d'ellipsométrie basé sur l'utilisation d'un système d'éclairage ponctuel à cône creux et d'un convertisseur de polarisation cartésien-cylindrique 9. En haut de la figure 14 est représentée une vue en coupe AA du faisceau tubulaire 50 incident dans un plan transverse à l'axe optique 8 généré par un système à base de lentilles coniques tel que décrit plus haut. On observe un anneau lumineux 50 (représenté en noir sur la figure 13). Un générateur d'état de polarisation 13, qui est de préférence un polariseur linéaire, permet de générer un faisceau 51 qui est un faisceau cylindrique polarisé linéairement suivant l'axe du polariseur 13 et ayant une distribution d'état de polarisation spatialement uniforme. Un modulateur de polarisation permet de moduler l'état de polarisation du faisceau incident 52 et d'effectuer des mesures en fonction de la modulation de polarisation, par exemple pour extraire des mesures ellipsométriques ou d'ellipsométrie de Mueller. Le faisceau polarisé 52 traverse une lame séparatrice 14. Le convertisseur de polarisation cartésien-cylindrique 9 reçoit le faisceau 52 et génère un faisceau 53 qui est polarisé suivant une distribution spatiale de polarisation de symétrie cylindrique autour de l'axe optique 8. L'objectif 6 reçoit le faisceau incident 52 et forme un faisceau 63 à distribution cylindrique de polarisation et à cône creux focalisé en un point 18 dans le plan focal 12. Le faisceau 63 est réfléchi spéculairement par l'échantillon 11 et revient sur le trajet du faisceau incident dès lors que la normale à l'échantillon est confondue avec l'axe optique 8 au point 18. Le faisceau 71 réfléchi est collecté par l'objectif 6 et repasse à travers le convertisseur de polarisation 9, cette fois-ci dans le sens cylindrique-cartésien. Le faisceau 72 présente une distribution uniforme d'état de polarisation. Ce faisceau 72 est réfléchi par la lame séparatrice 14 en direction d'un analyseur d'état de polarisation 16, qui est de préférence un polariseur linéaire. On obtient ainsi en sortie du dispositif de la figure 14, un faisceau 73 cylindrique à cône creux polarisé linéairement suivant l'axe de l'analyseur 16 et ayant une distribution d'état de polarisation spatialement uniforme. La répartition lumineuse du faisceau 73 est représentée schématiquement suivant la coupe BB. Un détecteur détecte l'intensité du faisceau 73 en fonction de la modulation de polarisation. Le dispositif de la figure 14 permet ainsi de réaliser des mesures ellipsométriques ($\psi$, $\Delta$) sur une zone de mesure de dimension microscopique sur l'échantillon, tout en fournissant un signal d'excellente luminosité, puisqu'on utilise tous les plans d'incidence autour de l'axe optique 8. La lame séparatrice 15 a pour effet d'atténuer l'intensité du faisceau lumineux par un facteur d'atténuation environ égal à quatre. La lame séparatrice 15 peut aussi induire des effets sur la polarisation nécessitant un alignement et/ou une calibration précise des composants optiques du dispositif de mesure de la figure 14.

La figure 15 représente une variante du dispositif ellipsométrique de la figure 14, dans lequel la lame séparatrice 15 est remplacée par un miroir 19 interposé sur une moitié du faisceau incident de manière à éclairer sur un demi-anneau 50 et à collecter le faisceau réfléchi sur un demi-anneau 73. Les composants identiques à ceux du dispositif de la figure 14 sont indiqués par les mêmes signes de référence. Le faisceau tubulaire 50 ou cylindrique à cône creux est coupé par l'intermédiaire d'un masque de manière à éclairer sur un demi-anneau, comme représenté en coupe AA. Un générateur d'état de polarisation 13, de préférence un polariseur linéaire uniforme, génère un faisceau semi-cylindrique polarisé 51. Un modulateur de polarisation 14, de préférence spatialement uniforme, module l'état de polarisation du faisceau semi-cylindrique 52. Un convertisseur de polarisation cartésien-cylindrique 9 (ou semi-cylindrique) reçoit le faisceau 52 et génère un faisceau semi-cylindrique 53 qui est polarisé mais avec une distribution spatiale de polarisation de symétrie cylindrique par rapport à l'axe optique 8. L'objectif 6 reçoit le faisceau incident semi-cylindrique 53 et forme un faisceau 63 à distribution cylindrique de polarisation et à cône creux focalisé en un point 18 dans le plan focal 12. Le faisceau 63 est réfléchi spéculairement par l'échantillon 11 et forme un faisceau réfléchi 71. Dans le dispositif de la figure 15, le faisceau 71 ne revient pas sur le trajet du faisceau incident, mais sur une moitié du cylindre symétrique par rapport à la moitié de cylindre du faisceau d'éclairage 52, lorsque la normale à l'échantillon est confondue avec l'axe optique 8 au point 18. L'objectif 6 collecte le faisceau 71 réfléchi qui passe à travers le convertisseur de polarisation 9 dans le sens cylindrique-cartésien. Le faisceau 72 présente une distribution uniforme d'état de polarisation et une distribution semi-cylindrique d'intensité. Ce faisceau 72 est réfléchi par un miroir 19 en direction d'un analyseur d'état de polarisation 16, qui est de préférence un polariseur linéaire. On obtient ainsi en sortie du dispositif de la figure 15, un faisceau 73 semi-cylindrique à cône creux polarisé linéairement suivant l'axe de l'analyseur 16 et ayant une distribution d'état de polarisation spatialement uniforme. La répartition lumineuse du faisceau 73 est représentée schématiquement suivant la coupe BB. Un détecteur détecte l'intensité du faisceau 73 en fonction de la modulation de polarisation. Le masquage de la moitié du faisceau associé à l'utilisation d'un miroir 19 permet de réduire les pertes d'intensité du signal détecté de moitié comparativement au dispositif de la figure 14. De plus, les effets de polarisation du miroir 19 peuvent être plus facilement calibrés que ceux d'une lame séparatrice 14.

On comprend que le dispositif d'éclairage ponctuel à cône creux par exemple selon les figures 14 et 15 permet avantageusement d'être appliqué à l'ellipsométrie sous angle d'incidence variable.

Les figures 6-9, 12, 14 et 15 représentent des dispositifs d'éclairage et de collecte d'un signal réfléchi ou rétro-diffusé. Les mêmes principes peuvent s'appliquer à un dispositif d'éclairage et un dispositif de collecte d'un signal transmis ou diffusé vers l'avant, c'est-à-dire à travers l'échantillon.

Il est particulièrement avantageux de pouvoir analyser un même point d'un échantillon à la fois par un dispositif d'analyse Raman et par un dispositif d'analyse ellipsométrique, comme cela est exposé dans le brevet FR2784749. L'homme du métier combinera avantageusement un dispositif d'éclairage et de collecte de signal diffusé selon la figure 8 ou 9 et un dispositif d'éclairage et de collecte de signal réfléchi ou transmis selon la figure 14 ou 15 pour extraire d'un même point de mesure 18 des mesures de spectrométrie Raman et des mesures ellipsométriques.

Le dispositif d'illumination ponctuel à cône creux selon l'un des modes de réalisation de l'invention, peut-être couplé avec une source laser standard monochromatique mais également avec une source cohérente polychromatique, comme par exemple une source supercontinuum ou encore une source plasma commandée par laser (source LDLS) qui permettent d'obtenir un faisceau collimaté de bonne qualité (et spectralement large) et donc compatible avec le dispositif décrit ici. Le dispositif de l'invention permet d'obtenir un faisceau d'illumination à cône creux sans obturateur central et donc quasiment sans perte d'intensité du faisceau lumineux, ce qui est un avantage considérable par comparaison aux dispositifs antérieurs.

Le dispositif d'éclairage ponctuel à cône creux pour microscope de l'invention permet d'obtenir une meilleure résolution axiale (en profondeur) car il ne produit pas de rayonnement laser dans l'axe en dehors du point focal ce qui réduit la profondeur de champ du faisceau d'éclairage.

Le dispositif d'éclairage permet une réduction de l'influence du substrat qui sert de support à l'échantillon (pas d'émission spectrale du substrat).

Le dispositif d'éclairage permet d'obtenir un faisceau d'éclairage laser ayant une distribution angulaire conique.

Le dispositif est avantageusement réglable, par translation axiale de la deuxième lentille conique et/ou d'un afocal, ce qui permet de faire varier l'angle d'incidence du faisceau d'éclairage sur l'échantillon, sans changement de composant optique, et sans modification du point de focalisation. La variation d'angle d'incidence du faisceau d'éclairage à fond sombre permet d'étudier la « plume » de diffusion Raman, c'est-à-dire la répartition du signal Raman non seulement en configuration de rétro diffusion suivant une direction opposée (à 180 degrés) par rapport à la direction incidente du faisceau d'éclairage, mais également en fonction d'autres angles de diffusion.

En dehors du plan de focalisation, le dispositif d'éclairage ponctuel à cône creux de l'invention ne collecte pas de lumière du laser. Le filtrage du faisceau de diffusion en est ainsi plus aisé, ce qui permet notamment des mesures Raman basse fréquence, c'est-à-dire à des longueurs d'onde très proches de la longueur d'onde du faisceau laser d'excitation.

## Revendications

1. Microspectromètre Raman comprenant :

   - un dispositif optique d'éclairage à cône creux et à focalisation ponctuelle comprenant des moyens d'illumination comprenant :
   - une source de lumière ponctuelle, lesdits moyens d'illumination étant aptes à générer un faisceau lumineux incident collimaté (10),
   - un objectif optique (6) ayant un axe optique (8, 8') et un plan focal image (12), l'objectif optique (6) étant disposé de manière à recevoir un faisceau lumineux incident cylindrique (50) et à former une image de la source en un point (18) dans le plan focal image (12),
   - un système optique comprenant une première lentille conique (1) et une deuxième lentille conique (5), ledit système optique étant disposé sur le trajet optique du faisceau lumineux incident entre les moyens d'illumination et l'objectif optique (6),
   - la première lentille conique (1) étant disposée de manière à recevoir ledit faisceau lumineux incident collimaté (10) et à former un faisceau lumineux à cône creux (20), ayant, dans un plan transverse à l'axe du faisceau, une distribution lumineuse comprenant une partie centrale sombre et une partie annulaire claire,
   - la deuxième lentille conique (5) étant disposée de manière à recevoir ledit faisceau lumineux à cône creux (20, 40) de la première lentille conique (1) et à former un faisceau lumineux cylindrique à fond noir (50) ayant, dans un plan transverse à l'axe du faisceau, une distribution lumineuse comprenant une partie centrale sombre et une partie annulaire claire,
   - l'objectif optique (6) étant disposé de manière à recevoir ledit faisceau lumineux cylindrique à fond noir (50) de la deuxième lentille conique (5), à former un faisceau lumineux à cône creux (60) et à focaliser ledit faisceau lumineux à cône creux (60) en un point (18) de dimensions micrométriques dans le plan focal image (12), et
   - le dispositif optique d'éclairage à cône creux et à focalisation ponctuelle étant apte à éclairer un échantillon (11) par un faisceau lumineux à cône creux (60) focalisé en un point (18) sur un échantillon de manière à générer un faisceau optique réfléchi ou rétro-diffusé par l'échantillon (11), **caractérisé en ce que** :
   - ledit microspectromètre comprend en outre un composant optique (7, 7') disposé soit dans ladite partie centrale sombre soit dans ladite partie annulaire claire du faisceau d'éclairage à cône creux (40, 50, 60), ledit composant optique (7, 7') étant apte à séparer spatialement, d'une part, un faisceau optique transmis ou réfléchi et, d'autre part, un faisceau diffusé par l'échantillon (11), de manière à former un faisceau collecté (100, 71) de diffusion et à diriger ledit faisceau collecté (100) de diffusion vers un spectromètre.

2. Microspectromètre Raman à cône creux et à focalisation ponctuelle selon la revendication 1 dans lequel ledit

# EP 2 734 884 B1

composant optique est un miroir de collecte (7) incliné par rapport à l'axe optique (8) de manière à collecter un faisceau de rétro-diffusion Raman (100) provenant d'un échantillon (11), ledit miroir (7) étant disposé à l'intérieur du faisceau d'éclairage à cône creux (40, 50, 60).

3. Microspectromètre Raman à cône creux selon la revendication 1 dans lequel ledit composant optique est un miroir (7') incliné par rapport à l'axe optique (4) de manière à recevoir le faisceau d'éclairage cylindrique à fond noir (50) et à le diriger vers l'objectif (6), ledit miroir (7') comprenant une ouverture de manière à laisser passer un faisceau de rétro-diffusion Raman (100) provenant d'un échantillon (11) et collecté par l'objectif (6).

4. Dispositif de microspectrométrie Raman amplifié par pointe comprenant un microspectromètre Raman à cône creux selon l'une des revendications 1 à 3 et un microscope à champ proche comportant une pointe (25) ayant une extrémité disposée au point de focalisation (18) du faisceau lumineux à cône creux (60) et dans lequel l'axe de la pointe (25) est situé en dehors de la partie lumineuse du faisceau lumineux à cône creux (60).

5. Dispositif de microspectrométrie Raman amplifié par pointe selon la revendication 4 dans lequel le microscope est un microscope droit, la pointe (25) de microscope à champ proche et le dispositif optique d'éclairage à cône creux et à focalisation ponctuelle étant disposés d'un même côté de l'échantillon (11).

6. Dispositif de microspectrométrie Raman amplifié par pointe selon la revendication 4 dans lequel le microscope est un microscope inversé, l'extrémité de la pointe (25) de microscope à champ proche étant disposée face au dispositif optique d'éclairage à cône creux de manière à ce que le faisceau lumineux à cône creux (60) soit focalisé à travers un échantillon transparent (11) sur l'extrémité de la pointe (25).

7. Microspectromètre Raman selon l'une des revendications 1 à 3 dans lequel :

   - la première lentille conique (1) comprend une face conique centrée sur l'axe optique (8) et disposée vers le faisceau lumineux incident collimaté (10) ;
   - la deuxième lentille conique (5) comprend une face conique centrée sur l'axe optique (8) et disposée vers le faisceau lumineux à cône creux (20, 40).

8. Microspectromètre Raman selon l'une des revendications 1 à 3 comprenant en outre un système optique afocal disposé soit entre les moyens d'illumination et la première lentille conique (1), soit entre la première lentille conique (1) et la deuxième lentille conique (5), soit entre la deuxième lentille conique (5) et l'objectif (6).

9. Microspectromètre Raman selon l'une des revendications 1 à 3 comprenant en outre des moyens de déplacement axial de la première et/ou de la deuxième lentille conique (1, 5) le long de l'axe optique (8, 8') de manière à modifier les dimensions géométriques du faisceau lumineux cylindrique à fond noir (50).

10. Microspectromètre Raman selon l'une des revendications 1 à 3 comprenant en outre des moyens de polarisation (13, 14, 9) du faisceau optique d'éclairage.


**Patentansprüche**

1. Raman-Mikrospektrometer mit

   - einer optischen Beleuchtungsvorrichtung mit hohlem Konus und mit punktförmiger Fokussierung, die Beleuchtungsmittel mit
   - einer punktförmigen Lichtquelle aufweist, wobei die Beleuchtungsmittel dazu ausgelegt sind, einen einfallenden gebündelten Lichtstrahl (10) zu erzeugen,
   - einem optischen Objektiv (6), das eine optische Achse (8, 8') und eine fokale Bildebene (12) aufweist, wobei das optische Objektiv (6) so angeordnet ist, daß es einen einfallenden zylindrischen Lichtstrahl (50) empfängt und ein Bild der Quelle in einem Punkt (18) in der fokalen Bildebene (12) erzeugt,
   - einem optischen System, das eine erste konische Linse (1) und eine zweite konische Linse (5) aufweist, wobei das optische System auf dem optischen Weg des einfallenden Lichtstrahls zwischen den Beleuchtungsmitteln und dem optischen Objektiv (6) angeordnet ist,
   - wobei die erste konische Linse (1) so angeordnet ist, daß sie den einfallenden gebündelten Lichtstrahl (10) empfängt und einen Lichtstrahl (20) mit hohlem Konus bildet, der in einer zur Strahlachse senkrechten Ebene eine Lichtverteilung aufweist, die einen dunklen zentralen Teil und einen hellen ringförmigen Teil hat,
- wobei die zweite konische Linse (5) so angeordnet ist, daß sie den Lichtstrahl (20, 40) mit hohlem Konus der ersten konischen Linse (1) empfängt und einen zylindrischen Lichtstrahl (50) mit schwarzem Grund bildet, der in einer zur Strahlachse senkrechten Ebene eine Lichtverteilung aufweist, die einen dunklen zentralen Teil und einen hellen ringförmigen Teil hat,
- wobei das optische Objektiv (6) so angeordnet ist, daß es den zylindrischen Lichtstrahl (50) mit schwarzem Grund der zweiten konischen Linse (5) empfängt, einen Lichtstrahl (60) mit hohlem Konus bildet und den Lichtstrahl (60) mit hohlem Konus in einem Punkt (18) mit mikrometrischen Abmessungen in der fokalen Bildebene (12) lokalisiert, und
- wobei die optische Beleuchtungsvorrichtung mit hohlem Konus und mit punktförmiger Fokussierung dazu ausgelegt ist, eine Probe (11) mit einem Lichtstrahl (60) mit hohlem Konus, der in einem Punkt (18) auf der Probe fokalisiert ist, zu beleuchten, um einen durch die Probe (11) reflektierten oder als Hintergrundausstrahlung ausgesandten optischen Strahl zu erzeugen,

**dadurch gekennzeichnet, daß**

- das Mikrospektrometer außerdem ein optisches Bauelement (7, 7') aufweist, das entweder im dunklen zentralen Teil oder im hellen ringförmigen Teil des Beleuchtungsstrahls (40, 50, 60) mit hohlem Konus angeordnet ist, wobei das optische Bauelement (7, 7') dazu ausgelegt ist, einen übertragenen oder reflektierten optischen Strahl einerseits und einen durch die Probe (11) gestreuten Strahl andererseits räumlich zu trennen, um einen gebündelten Streustrahl (100, 71) zu bilden und den gebündelten Streustrahl (100) auf ein Spektrometer zu richten.

2. Raman-Mikrospektrometer mit hohlem Konus und mit punktförmiger Fokussierung gemäß Anspruch 1, bei dem das optische Bauelement ein Sammelspiegel (7) ist, der gegenüber der optischen Achse (8) geneigt ist, um einen von einer Probe (11) kommenden, als Raman-Hintergrundausstrahlung ausgesandten Strahl (100) zu sammeln, wobei der Spiegel (7) im Inneren des Beleuchtungsstrahls (40, 50, 60) mit hohlem Konus angeordnet ist.

3. Raman-Mikrospektrometer mit hohlem Konus gemäß Anspruch 1, bei dem das optische Bauelement ein Spiegel (7') ist, der gegenüber der optischen Achse (8) geneigt ist, um den zylindrischen Beleuchtungsstrahl (50) mit schwarzem Grund zu empfangen und zum Objektiv (6) hin zu richten, wobei der Spiegel (7') eine Öffnung aufweist, um einen von einer Probe (11) kommende und durch das Objektiv (6) gesammelten, als Raman-Hintergrundausstrahlung ausgesandten Strahl (100) durchzulassen.

4. Durch eine Spitze verstärkte Vorrichtung für Raman-Mikrospektrometrie, die ein Raman-Mikrospektrometer mit hohlem Konus gemäß einem der Ansprüche 1 bis 3 und ein Nahfeldmikroskop mit einer Spitze (25), die ein im Brennpunkt (18) des Lichtstrahls (60) mit hohlem Konus angeordnetes Ende hat, aufweist und bei dem die Achse der Spitze (25) außerhalb des leuchtenden Teils des Lichtstrahls (60) mit hohlem Konus liegt.

5. Durch eine Spitze verstärkte Vorrichtung für Raman-Mikrospektrometrie gemäß Anspruch 4, bei der das Mikroskop ein gerades Mikroskop ist, wobei die Nahfeldmikroskopspitze (25) und die optische Beleuchtungsvorrichtung mit hohlem Konus und mit punktförmiger Fokussierung auf einer selben Seite der Probe (11) angeordnet sind.

6. Durch eine Spitze verstärkte Vorrichtung für Raman-Mikrospektrometrie gemäß Anspruch 4, bei der das Mikroskop ein umgekehrtes Mikroskop ist, wobei die Nahfeldmikroskopspitze (25) gegenüber der optischen Beleuchtungsvorrichtung mit hohlem Konus angeordnet ist, damit der Lichtstrahl (60) mit hohlem Konus durch eine durchsichtige Probe (11) auf das Ende der Spitze (25) fokalisiert wird.

7. Raman-Mikrospektrometer gemäß einem der Ansprüche 1 bis 3, bei dem

- die erste konische Linse (1) eine auf die optische Achse (8) zentrierte und zum einfallenden gebündelten Lichtstrahl (10) hin angeordnete konische Seite aufweist,
- die zweite konische Linse (5) eine auf die optische Achse (8) zentrierte und zum Lichtstrahl (20, 40) mit hohlem Konus hin angeordnete konische Seite aufweist.

8. Raman-Mikrospektrometer gemäß einem der Ansprüche 1 bis 3, das außerdem ein afokales optisches System aufweist, das entweder zwischen den Beleuchtungsmitteln und der ersten konischen Linse (1) oder der ersten konischen Linse (1) und der zweiten konischen Linse (5) oder zwischen der zweiten konischen Linse (5) und dem Objektiv (6) angeordnet ist.

9. Raman-Mikrospektrometer gemäß einem der Ansprüche 1 bis 3. das außerdem Mittel zur axialen Verlagerung der ersten und/oder der zweiten konischen Linse (1, 5) entlang der optischen Achse (8, 8') aufweist, um die geometrischen Abmessungen des zylindrischen Lichtstrahls (50) mit schwarzem Grund zu ändern.

10. Raman-Mikrospektrometer gemäß einem der Ansprüche 1 bis 3, das außerdem Mittel (13, 14. 9) zum Polarisieren des optischen Beleuchtungsstrahls aufweist.

**Claims**

1. A Raman microspectrometer comprising:

   - a hollow-cone and point-focus lighting optical device having illumination means comprising:
   - a point light source, said illumination means being adapted to generate a collimated incident light beam (10),
   - an optical lens (6) having an optical axis (8, 8') and an image focal plane (12), the optical lens (6) being arranged so as to receive a cylindrical incident light beam (50) and to form an image of the source at one point (18) in the image focal plane (12),
   - an optical system comprising a first conical lens (1) and a second conical lens (5), said optical system being placed on the optical path of the incident light beam between the illumination means and the optical lens (6),
   - the first conical lens (1) being arranged so as to receive said collimated incident light beam (10) and to form a hollow-cone light beam (20) having, in a plane transverse to the beam axis, a light distribution comprising a dark central portion and a clear annular portion,
   - the second conical lens (5) being arranged so as to receive said hollow-cone light beam (20, 40) of the first conical lens (1) and to form a dark-background cylindrical light beam (50) having, in a plane transverse to the beam axis, a light distribution comprising a dark central portion and a clear annular portion,
   - the optical lens (6) being arranged so as to receive said dark-background cylindrical light beam (50) from the second conical lens (5), to form a hollow-cone light beam (60) and to focus said hollow-cone light beam (60) to a point (18) of micrometric size in the image focal plane (12), and
   - the hollow-cone and point-focus lighting optical device being adapted to light a sample (11) with a hollow-cone light beam (60) focused to a point (18) on a sample so as to generate an optical beam reflected or backscattered by the sample (11), **characterized in that**:
   - said microspectrometer further comprises an optical component (7, 7') placed either in said dark central portion or in said clear annular portion of the hollow-cone lighting beam (40, 50, 60), said optical component (7, 7') being adapted to spatially separate, on the one hand, an optical beam transmitted or reflected and, in the other hand, a beam scattered by the sample (11), so as to form a collected scattering beam (100, 71) and to direct said collected scattering beam (100) towards a spectrometer.

2. A hollow-cone and point-focus Raman microspectrometer according to claim 1, wherein said optical component is a collecting mirror (7) inclined with respect to the optical axis (8) so as to collect a Raman backscattering beam (100) coming from a sample (11), said mirror (7) being arranged inside the hollow-cone lighting beam (40, 50, 60).

3. A hollow-cone Raman microspectrometer according to claim 1, wherein said optical component is a mirror (7') inclined with respect to the optical axis (4) so as to receive the dark-background cylindrical light beam (50) and to direct it towards the lens (6), said mirror (7') comprising an aperture so as to let through a Raman backscattering beam (100) coming from a sample (11) and collected by the lens (6).

4. A tip-enhanced Raman microspectrometer device comprising a hollow-cone Raman microspectrometer according to one of claims 1 to 3 and a near-field microscope including a tip (25) having an end placed at the focal point (18) of the hollow-cone light beam (60) and wherein the axis of the tip (25) is located out of the light portion of the hollow-cone light beam (60).

5. A tip-enhanced Raman microspectrometer device according to claim 4, wherein the microscope is an upright microscope, the near-field microscope tip (25) and the hollow-cone and point-focus lighting optical device being placed on a same side of the sample (11).

6. A tip-enhanced Raman microspectrometer device according to claim 4, wherein the microscope is an inverted microscope, the end of the near-field microscope tip (25) being placed opposite the hollow-cone lighting optical device so that the hollow-cone light beam (60) is focused through a transparent sample (11) to the end of the tip (25).

7. A Raman microspectrometer according to one of claims 1 to 3, wherein:

   - the first conical lens (1) comprises a conical face centred to the optical axis (8) and placed towards the collimated incident light beam (10);
   - the second conical lens (5) comprises a conical face centred to the optical axis (8) and placed towards the hollow-cone light beam (20, 40).

8. A Raman microspectrometer according to one of claims 1 to 3, further comprising an afocal optical system placed either between the illumination means and the first conical lens (1), or between the first conical lens (1) and the second conical lens (5), or between the second conical lens (5) and the lens (6).

9. A Raman microspectrometer according to one of claims 1 to 3, further comprising means for axially moving the first and/or the second conical lens (1, 5) along the optical axis (8, 8') so as to modify the geometric dimensions of the dark-background cylindrical light beam (50).

10. A Raman microspectrometer according to one of claims 1 to 3, further comprising polarization means (13, 14, 9) of the lighting optical beam.

Figure 1

Figure 2

Figure 3

Figure 4A

Figure 4B

Figure 5A

Figure 5B

Figure 6

Figure 7A

Figure 7B

Figure 8

Figure 9

Figure 10A

Figure 10B

Figure 11

Figure 12

Figure 13

Figure 14

Figure 15

Fig. 16A          Fig. 16B          Fig. 16C

**EP 2 734 884 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 627643 A2
- WO 2008107702 A1
- FR 1055839
- FR 2784749

**Littérature non-brevet citée dans la description**

- **M. V. SCHULMERICH et al.** Dark field Raman microscopy. *Anal. Chem.,* 2010, vol. 82, 6273-6280